# EUROPEAN PATENT SPECIFICATION

(11) **EP 3 479 176 B1**
(45) Date of publication and mention of the grant of the patent: **21.06.2023**
(21) Application number: 17757866.3
(22) Date of filing: 19.06.2017
(51) Int. Cl.: G04F 10/00

(54) **SIGNAL PROCESSING APPARATUS AND METHOD, AND ELECTRONIC DEVICE COMPRISING THE APPARATUS**
SIGNALVERARBEITUNGSVORRICHTUNG UND -VERFAHREN UND ELEKTRONISCHE EINRICHTUNG MIT DER VORRICHTUNG
APPAREIL ET PROCÉDÉ DE TRAITEMENT DE SIGNAL, ET DISPOSITIF ÉLECTRONIQUE ÉQUIPÉ DE L'APPAREIL

(30) Priority: 30.06.2016 CN 201610506786
(43) Date of publication of application: 08.05.2019
(73) Proprietor: Alcatel Lucent, 91620 Nozay (FR)
(72) Inventor: HUANG, Huaming, Shanghai 201206 (CN); DENG, Zongming, Shanghai 201206 (CN)
(74) Representative: MERH-IP Matias Erny Reichl Hoffmann Patentanwälte PartG mbB
(86) International application number: PCT/IB2017/000949
(87) International publication number: WO 2018/002717

(56) References cited:
- US-A1- 2009 296 532
- Qi Zhong, MENG Xiangting, Li Deyuan, Yang Lei, Yao Zeen, Li Dongcang: "A high precision TDC based on a multi-phase clock", , 4 February 2015 (2015-02-04), XP002775219, Cornell University Library Retrieved from the Internet: URL:https://arxiv.org/abs/1502.01079 [retrieved on 2017-10-31]
- ZHOUJIANCHENG YIN ET AL: "A high-resolution time-to-digital converter based on multi-phase clock implement in field-programmable-gate-array", REAL TIME CONFERENCE (RT), 2012 18TH IEEE-NPSS, IEEE, 9 June 2012 (2012-06-09), pages 1-4, XP032314370, DOI: 10.1109/RTC.2012.6418217 ISBN: 978-1-4673-1082-6

## Description

### FIELD OF THE INVENTION

The present invention relates to the field of electronic devices, and more specifically relates to a method and apparatus for measuring signal latency, and an electronic device comprising the apparatus.

### BACKGROUND

In circuits of many electronic devices, it is needed to measure signal latency within a single board or between boards, and within a chip or between chips, and to perform signal processing according to the measured latency between signals, e.g., performing latency compensation to a signal.

Generally, a digital logic circuit may be used to test latency between signals. Typically the frequency of a clock used by the logical circuit decides a measurement accuracy of the signal latency. For example, if the logic circuit uses a 125MHz clock for measuring latency, the clock period will be 8 nanoseconds (ns), and the measured accuracy of the latency between signals is also 8ns. In other words, the final latency measurement result can only be an integer multiple of 8ns. For example, suppose an actual latency between signals is 65ns, while the measurement result is 72ns (9 times of 8ns), it cause a measuring error.

Using a clock with a higher frequency helps to improve the accuracy of latency measurement. However, it may lead to tight time sequence of the logic circuit, and power consumption of the circuit may also be higher Therefore, it is an issue worthy of being studied as to how to perform a high-precision real-time measurement on the latency between signals using a clock signal with a lower frequency.

In addition, a value of the latency between signals may also vary with conditions such as an ambient temperature. This is also demanding on real-time performance of latency measurement.

Document US 2009/296532 A1 discloses a time-to-digital converter which includes a circular delay chain, a phase interpolator and a time-to-digital (TDC) core.

Document Qi Zhong, MENG Xiangting, Li Deyuan, Yang Lei, Yao Zeen, Li Dongcang: "A high precision TDC based on a multi-phase clock", 4 February 2015 discloses a design of a high-precision time-to-digital converter based on a multiphase clock implemented using a single field-programmable gate array.

### SUMMARY OF THE INVENTION

According to the embodiments of the present invention, it is desired to provide a method and apparatus for measuring latency between signals, and more optionally, to perform latency compensation for a to-be-compensated signal according to a measured latency, having the features of respective independent claims. The dependent claims relate to preferred embodiments. The present invention is as defined in the appended set of claims.

According to an example in one aspect of the present invention, there is provided a signal processing method, comprising:
- measuring a latency between a first signal and a second signal using multiple clock signals of the same frequency but different phases, to obtain a first set of measurement values;
- determining a second set of measurement values from the first set of measurement values and phase differences between corresponding clock signals and a zero-phase-difference clock signal, wherein the zero-phase-difference clock signal is a clock signal with a fixed phase which is artificially determined and wherein the values associated with the second set of measurement values are different from each other.
- selecting a smaller measurement value from the second set of measurement values to be determined as the latency between the first signal and the second signal.

According to an example in another aspect of the present invention, there is provided a signal processing apparatus, comprising:
a first unit configured to measure a latency between a first signal and a second signal using and phase differences between corresponding clock signals and a zero-phase-difference clock signal;
- selecting a smaller measurement value from the second set of measurement values to be determined as the latency between the first signal and the second signal.

According to an example in another aspect of the present invention, there is provided a signal processing apparatus, comprising:
a first unit configured to measure a latency between a first signal and a second signal using multiple clock signals of the same frequency but different phases, to obtain a first set of measurement values;
a second unit configured to determine a second set of measurement values from the first set of measurement values and phase differences between corresponding clock signals and a zero-phase-difference clock signal, wherein the zero-phase-difference clock signal is a clock signal with a fixed phase which is artificially determined and wherein the values associated with the second set of measurement values are different from each other.
a third unit configured to select a smaller measurement value from the second set of measurement values to be determined as the latency between the first signal and the second signal.

According to an example in a further aspect of the present invention, there is provided an electronic device, comprising a signal processing apparatus as mentioned above.

Compared with the prior art, the method and apparatus according to the embodiments of the present invention have the following advantages: by measuring a latency between signals using multiple clock signals of the same frequency but different phases, not only the accuracy of the obtained latency measurement result is made higher, but also design and implementation of a latency-measuring circuit is made less difficult, such that a better system performance can be obtained more easily. Meanwhile, the measurement result of signal latency can also embody real-time change of an actual latency.

### BRIEF DESCRIPTION OF THE ACCOMPANYING DRAWINGS

The present invention will be understood more thoroughly through the detailed depiction and accompanying drawings provided below, wherein the same elements are represented by the same reference signals, wherein:

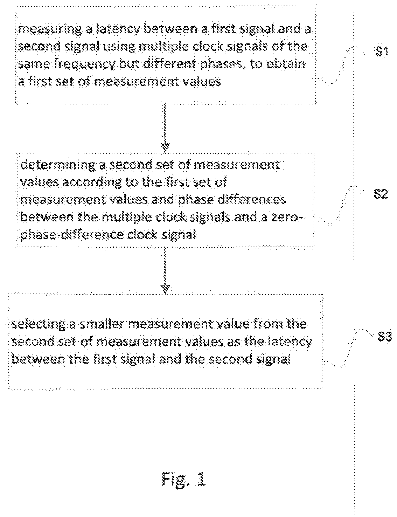

Fig. 1 illustrates a flow diagram of a method for signal processing according to an embodiment in one aspect of the present invention;

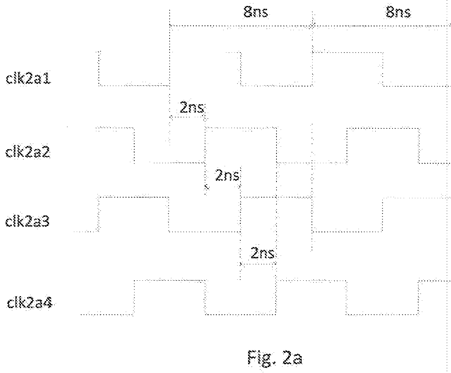

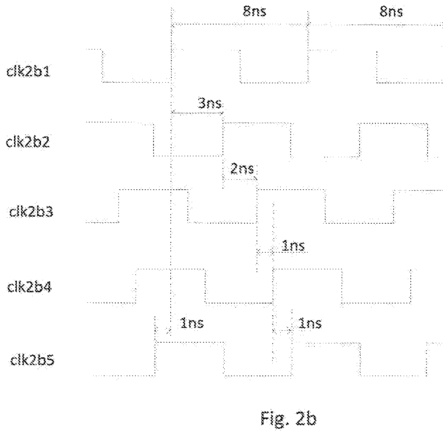

Figs. 2a and 2b illustrate schematic diagrams of multiple clock signals of the same frequency but different phases according to an embodiment of the present invention;
Fig. 3 illustrates a schematic diagram of a zero-phase-difference clock signal according to an embodiment of the present invention;

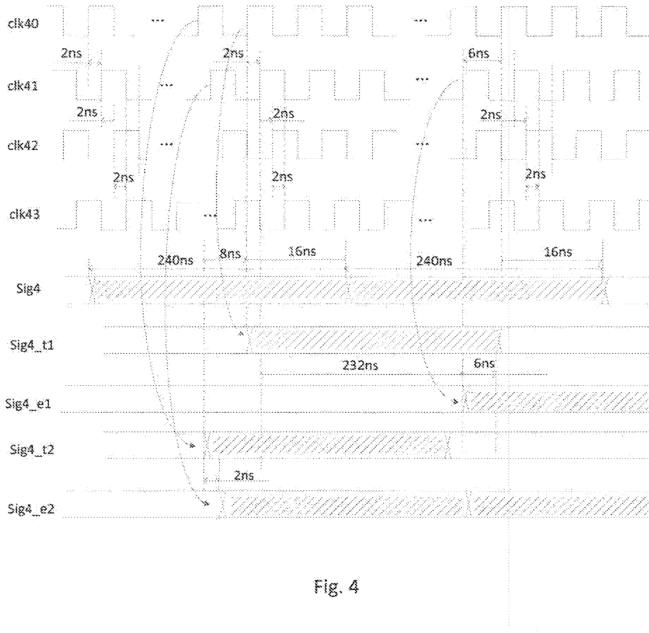

Fig. 4 illustrates a schematic signal diagram of performing latency compensation for a to-be-compensated signal according to an embodiment of the present invention;

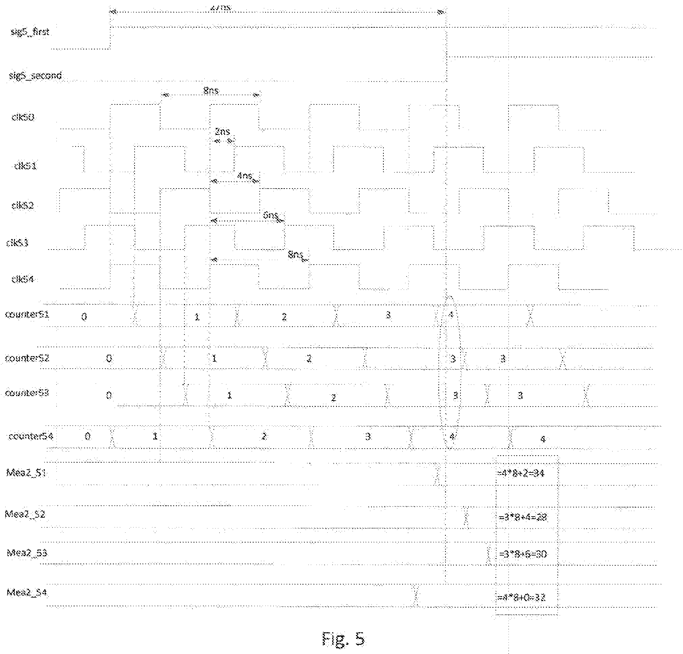

Fig. 5 illustrates a schematic diagram of a time sequence relationship among signals according to an embodiment of the present invention;
Fig. 6 illustrates a structural schematic diagram of a signal processing apparatus according to an embodiment in another aspect of the present invention.

It should be mentioned that these drawings are intended to illustrate general characteristics of a method, a structure and/or a material in some exemplary embodiments, and make supplementations to a written depiction provided hereinafter. However, these drawings are not drawn by proportion and might not accurately reflect an accurate structure or performance characteristic of any given embodiment, and should not be construed as defining or limiting the scope of numerical values or attributes covered by the exemplary embodiments.

### DETAILED DESCRIPTION OF THE PREFERRED EMBODIMENTS

Although the exemplary embodiments may have various modifications and alternative manners, some embodiments thereof are illustrated in the drawings as examples, which will be 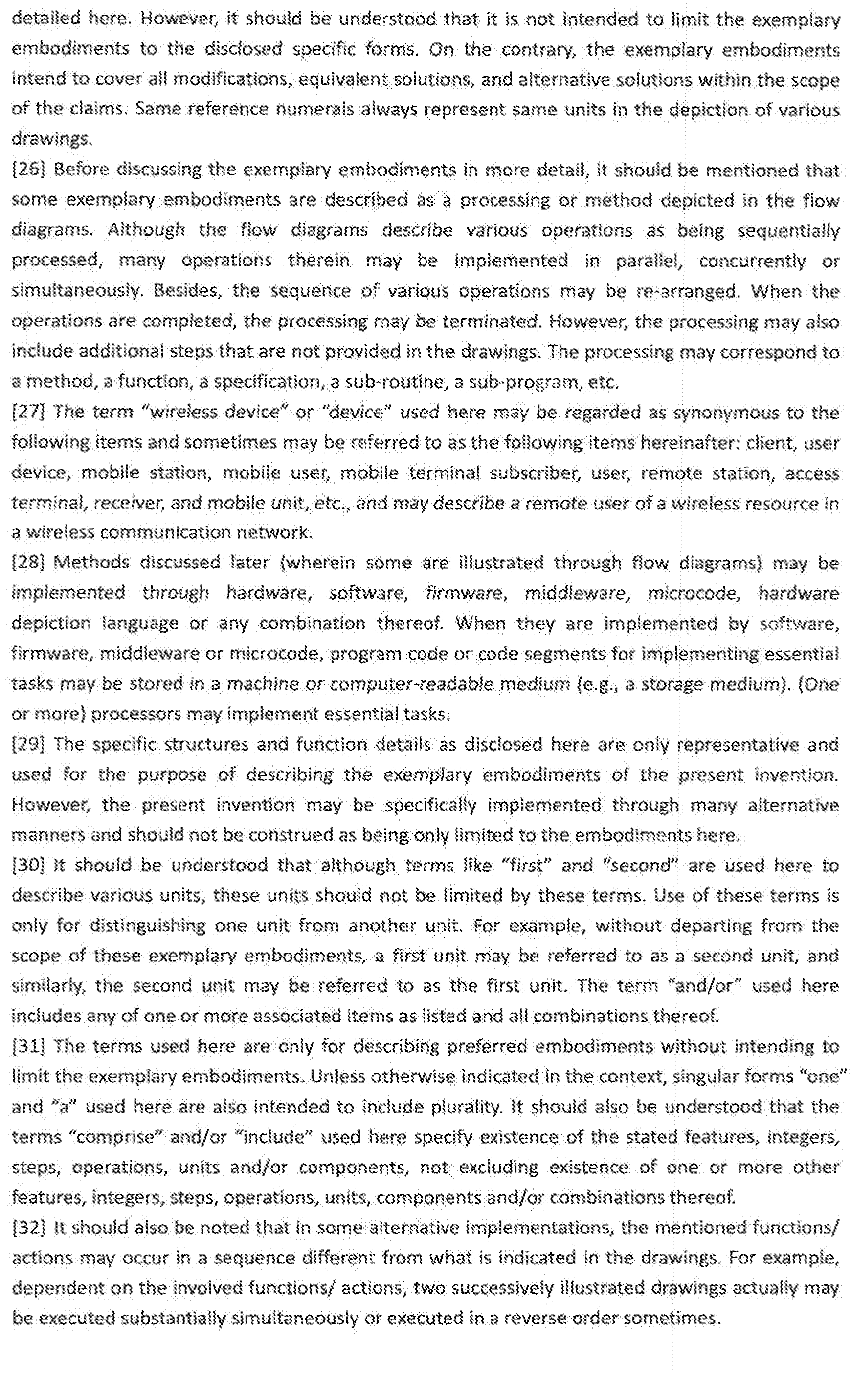 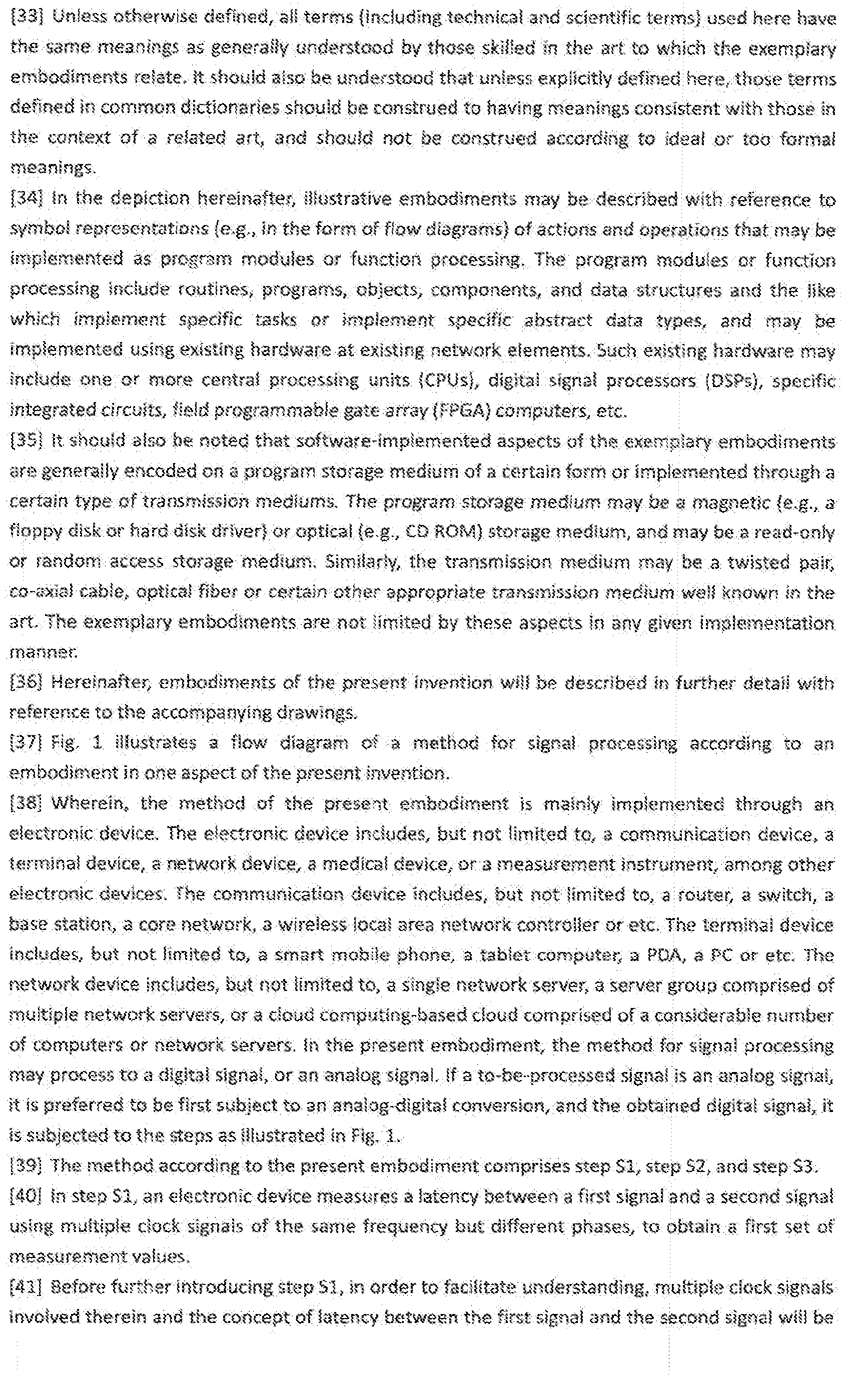 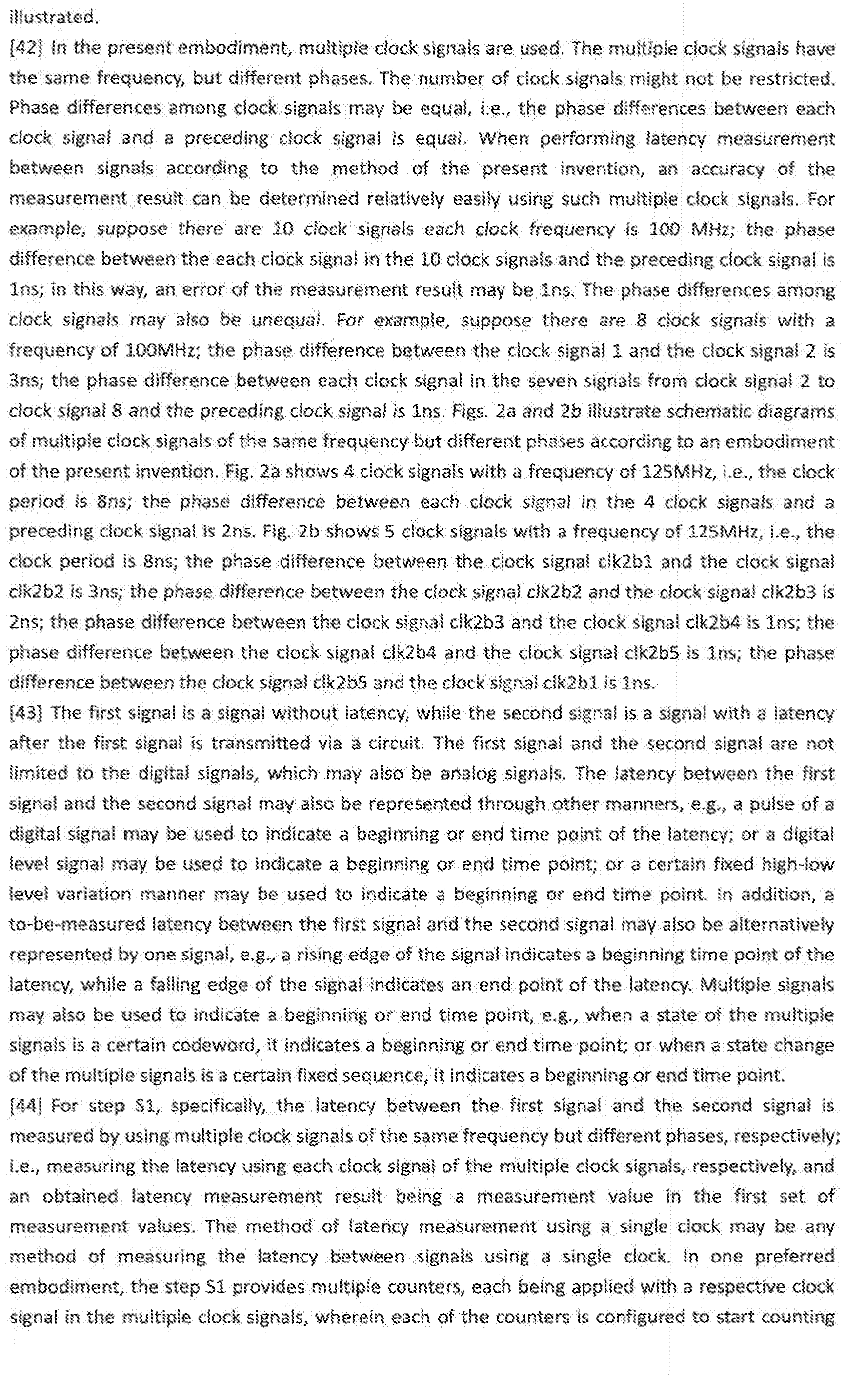 upon arrival of the first signal, and to stop counting upon arrival of the second signal, and a count value of each of the multiple counters is used as a measurement value in the first set of measurement values. Specifically, a group of counters are used to count. The number of counters is identical to that of the multiple clock signals; a clock of each counter refers to a clock signal in the multiple clock signals, and the clock signals are different from each other. Because the clock signals of the counters are different from each other, the clock signals have the same frequency but different phases, and the time sequence relationships of the clock signal with the first signal and the second signal are also different, the count value of each counter is also different. In another preferred embodiment, the first signal and the second signal are counted according to each clock signal in the multiple clock signals; for the each clock signal, a difference between the first signal count and the second signal count is calculated as a measurement value in the first set of measurement values. In this embodiment, with each clock signal in the multiple clock signals of the same frequency but different phases, one measurement value is obtained through the following manner: the clocks of two counters are the same clock signal; one counter starts to count upon arrival of the first signal; the other counter starts to count upon arrival of the second signal; a difference between the two count values is a measurement value in the first set of measurement values. The number of measurement values in the first set of measurement values is identical to the number of clock signals in the multiple clock signals. Likewise, in the present embodiment, because the phases of respective clock signals are different, the time sequence relationships of respective clock signals with the first signal and the second signal are different from each other; therefore, respective measurement values in the first set of measurement values are also different.

It should be noted that the above method of measuring a latency between signals using a single clock is only an example, and other existing possibly emerging methods of measuring the latency between signals using a single clock, if applicable to the present invention, should also be included within the protection scope of the present invention.

In step S2, a second set of measurement values is determined according to the first set of measurement values and phase differences between the multiple clock signals and a zero-phase-difference clock signal.

The zero-phase-difference clock signal refers to a clock signal with a fixed phase, which is artificially determined. Because a clock signal is a sine or cosine wave, other clock signals have the phase difference latency with respect to the zero-phase-difference clock signal.

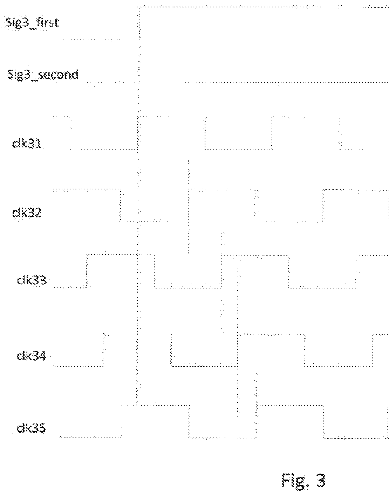

In one preferred embodiment according to the method of the present invention, the first signal is synchronized with the zero-phase difference clock signal. In the present invention, synchronization between the first signal and the zero-phase difference clock signal refers to an inherent time sequence relationship between the first signal and the zero-phase-difference clock signal, while the zero-phase-difference clock signal refers to a clock signal that is nearest to a beginning time indicated by the first signal and that can capture the first signal. Fig. 3 illustrates a schematic diagram of a zero-phase-difference clock signal according to an embodiment of the present invention. The clock signals clk31,...,clk35 refer to multiple clock signals of the same frequency but different phases, wherein clk31 refers to the zero-phase-difference clock signal, and sig3_first refers to the first signal. The sig3_first signal is synchronized with clock signalclk31.

Respective measurement values in the first set of measurement values are results of 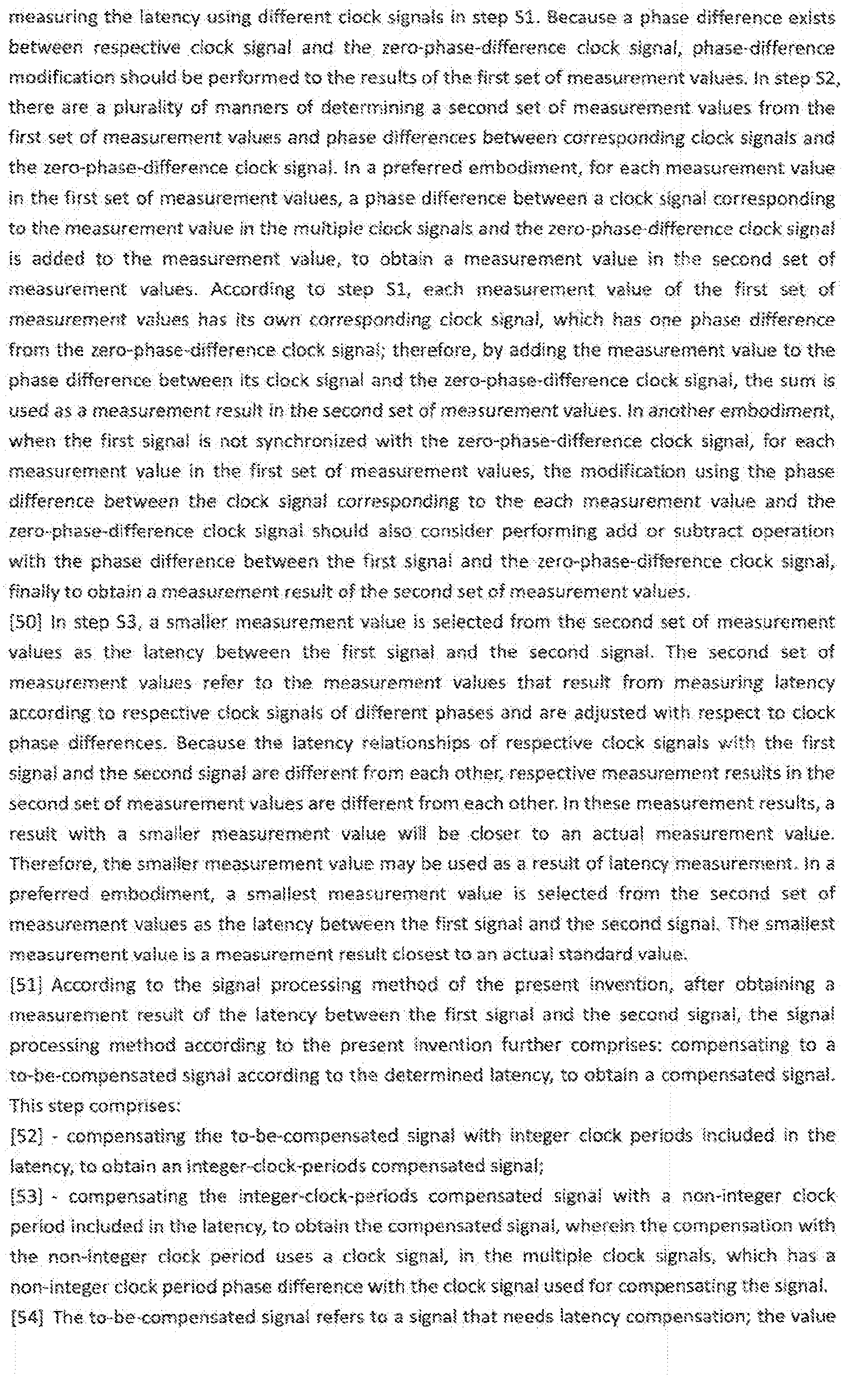 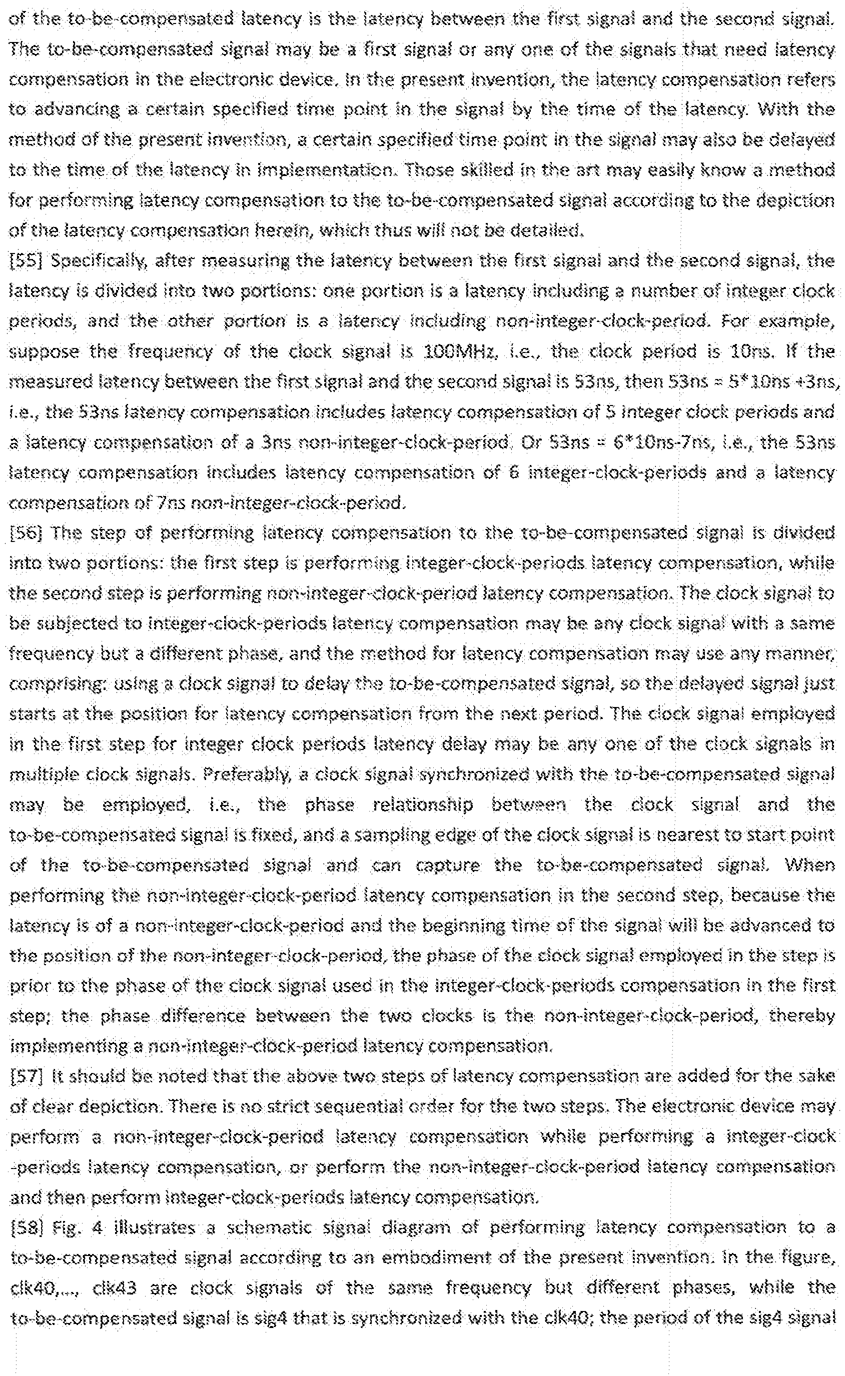 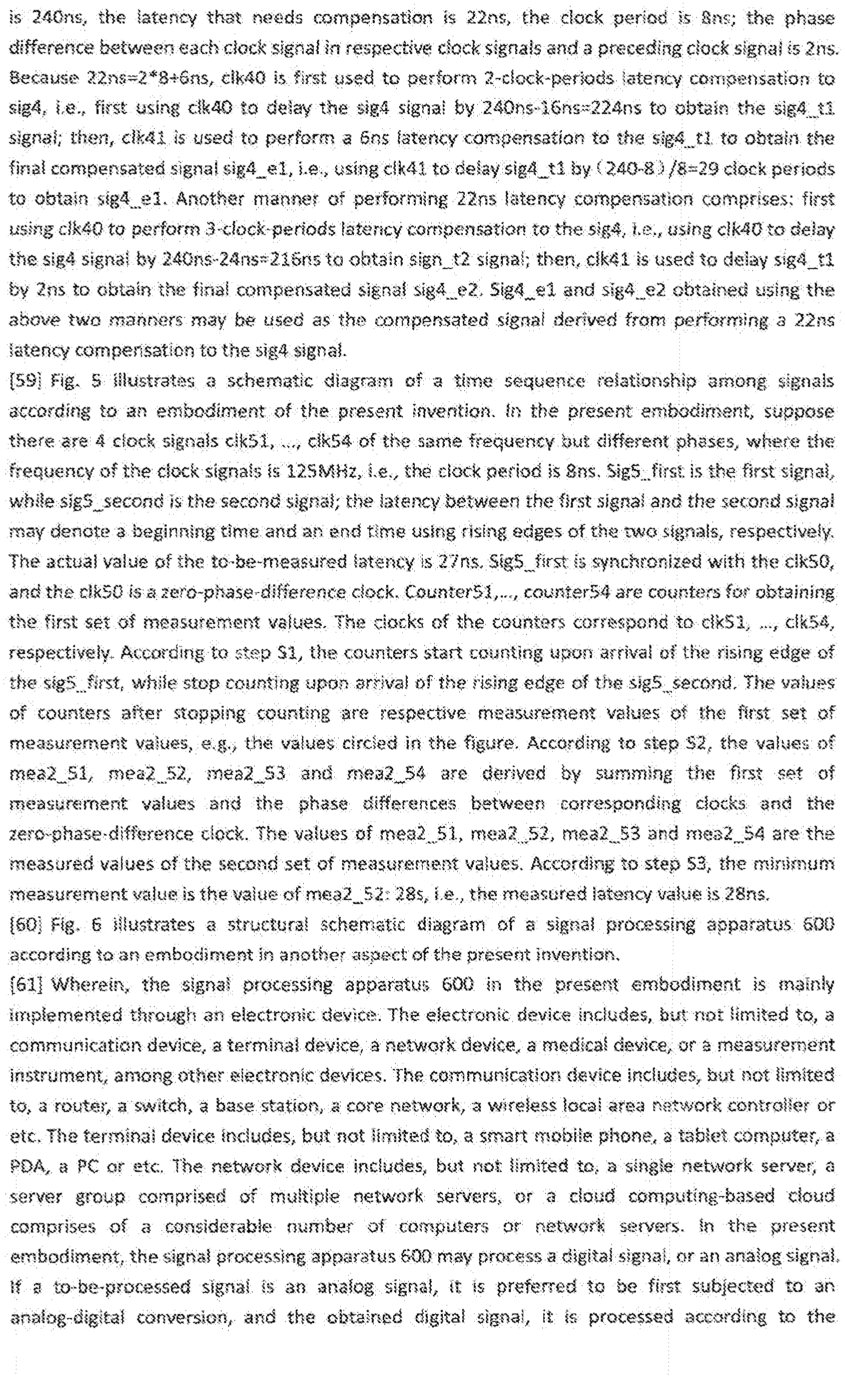 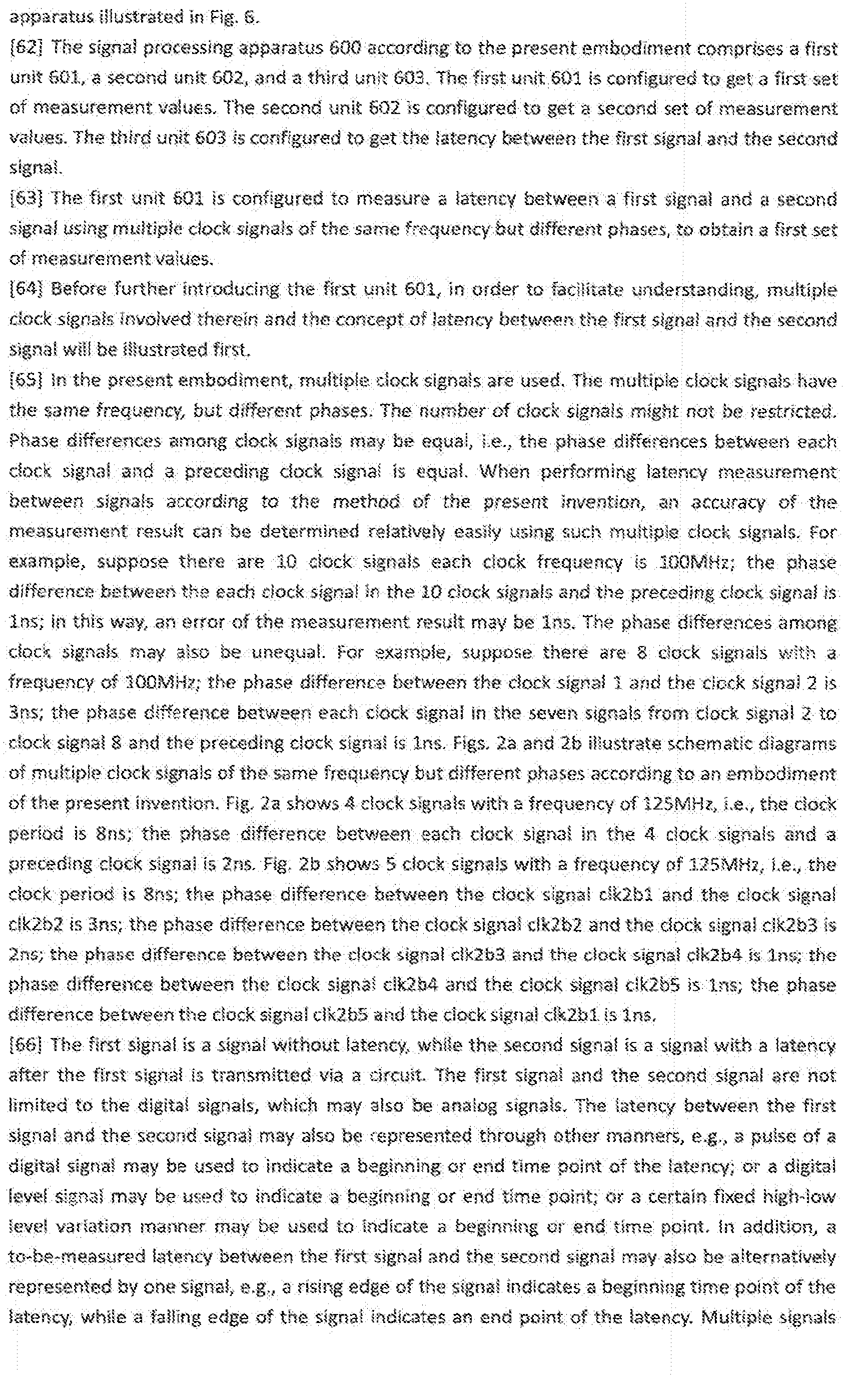 may also be used to indicate a beginning or end time point, e.g., when a state of the multiple signals is a certain codeword, it indicates a beginning or end time point; or when a state change of the multiple signals is a certain fixed sequence, it indicates a beginning or end time point.

For the first unit 601, specifically, the first unit 601 is configured to measure the latency between the first signal and the second signal by using multiple clock signals of the same frequency but different phases, respectively; i.e., measuring the latency using each clock signal of the multiple clock signals, respectively, and an obtained latency measurement result being a measurement value in the first set of measurement values. The apparatus of latency measurement using a single clock may be any apparatus of measuring the latency between signals using a single clock. In one preferred embodiment, multiple counters are used; each of the multiple counters is applied with a respective clock signal in the multiple clock signals, wherein each of the multiple counters is configured to start counting upon arrival of the first signal, and to stop counting upon arrival of the second signal; the first unit 601 is configured to use a count value of each of the counters as a measurement value in the first set of measurement values. Specifically, a group of counters are used to count. The number of counters is identical to that of the multiple clock signals; a clock of each counter refers to a clock signal in the multiple clock signals, and the clock signals are different from each other. Because the clock signals of the counters are different from each other, the clock signals have the same frequency but different phases, and the time sequence relationships of the clock signal with the first signal and the second signal are also different, the count value of each counter is also different. In another preferred embodiment, the first unit 601 is configured to count the first signal and the second signal according to each clock signal in the multiple clock signals, respectively; and calculate, for the each clock signal, a difference between count values of the first signal and the second signal as a measurement value in the first set of measurement values, respectively. In this embodiment, with each clock signal in the multiple clock signals of the same frequency but different phases, one measurement value is obtained through the following manner: the clocks of two counters are the same clock signal; one counter starts to count upon arrival of the first signal; the other counter starts to count upon arrival of the second signal; a difference between the two count values is a measurement value in the first set of measurement values. The number of measurement values in the first set of measurement values is identical to the number of clock signals in the multiple clock signals. Likewise, in the present embodiment, because the phases of respective clock signals are different, the time sequence relationships of respective clock signals with the first signal and the second signal are different from each other; therefore, respective measurement values in the first set of measurement values are also different.

It should be noted that the above apparatus of measuring a latency between signals using a single clock is only an example, and other existing possibly emerging apparatus of measuring the latency between signals using a single clock, if applicable to the present invention, should also be included within the protection scope of the present invention.

The second unit 602 is configured to determine a second set of measurement values according to the first set of measurement values and phase differences between the multiple clock signals and a zero-phase-difference clock signal.

The zero-phase-difference clock signal refers to a clock signal with a fixed phase, which is artificially determined. Because a clock signal is a sine or cosine wave, other clock signals have 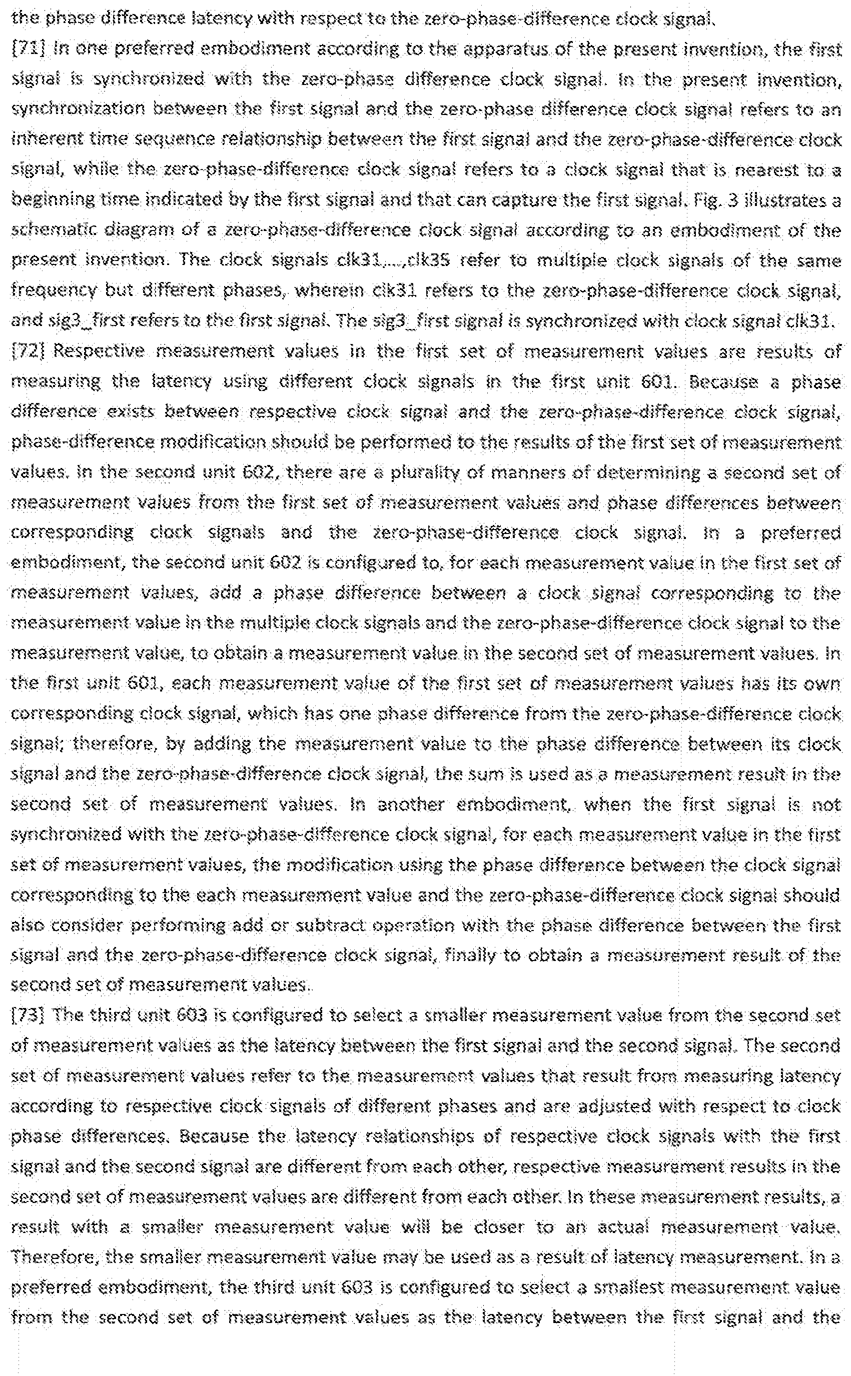 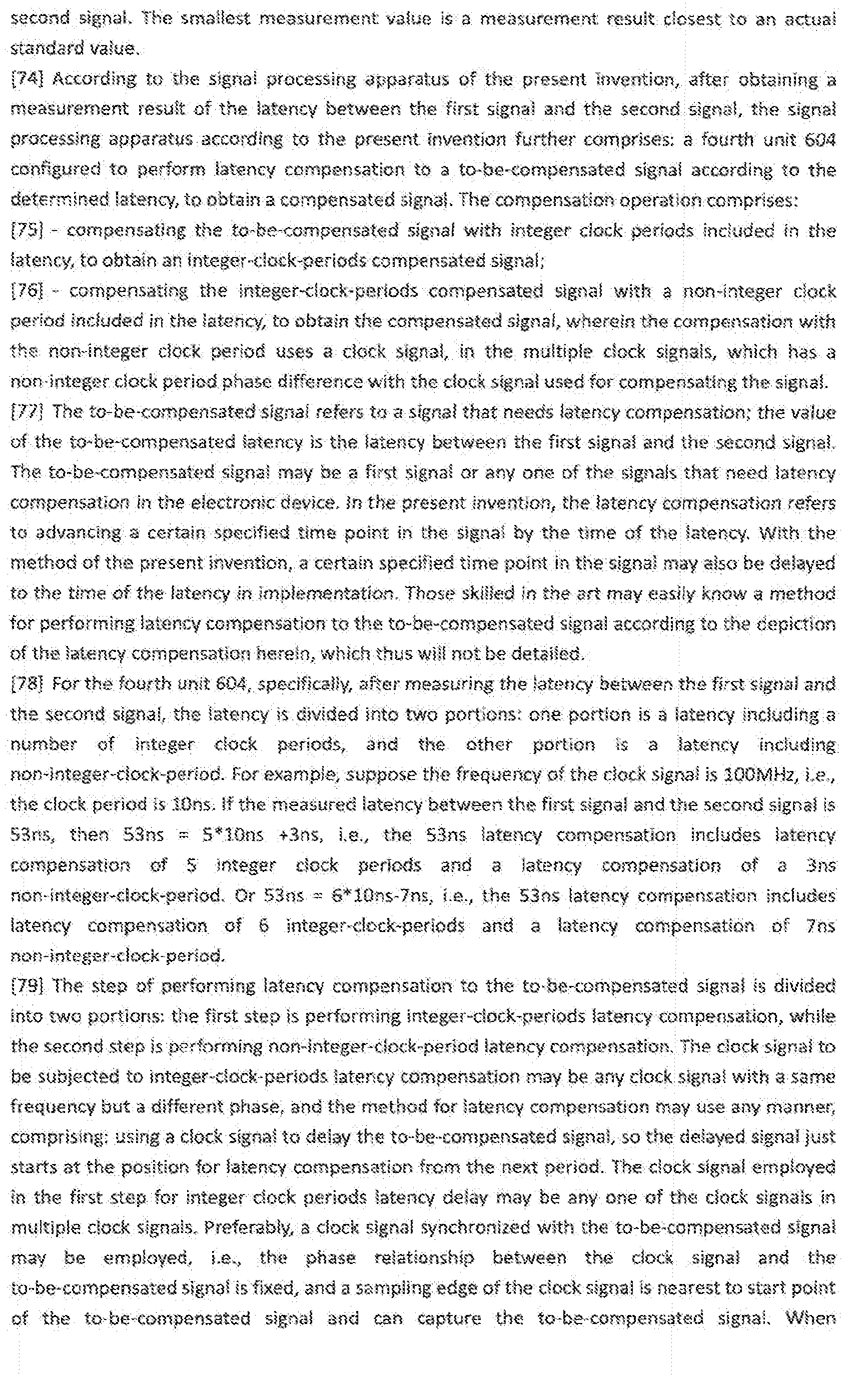 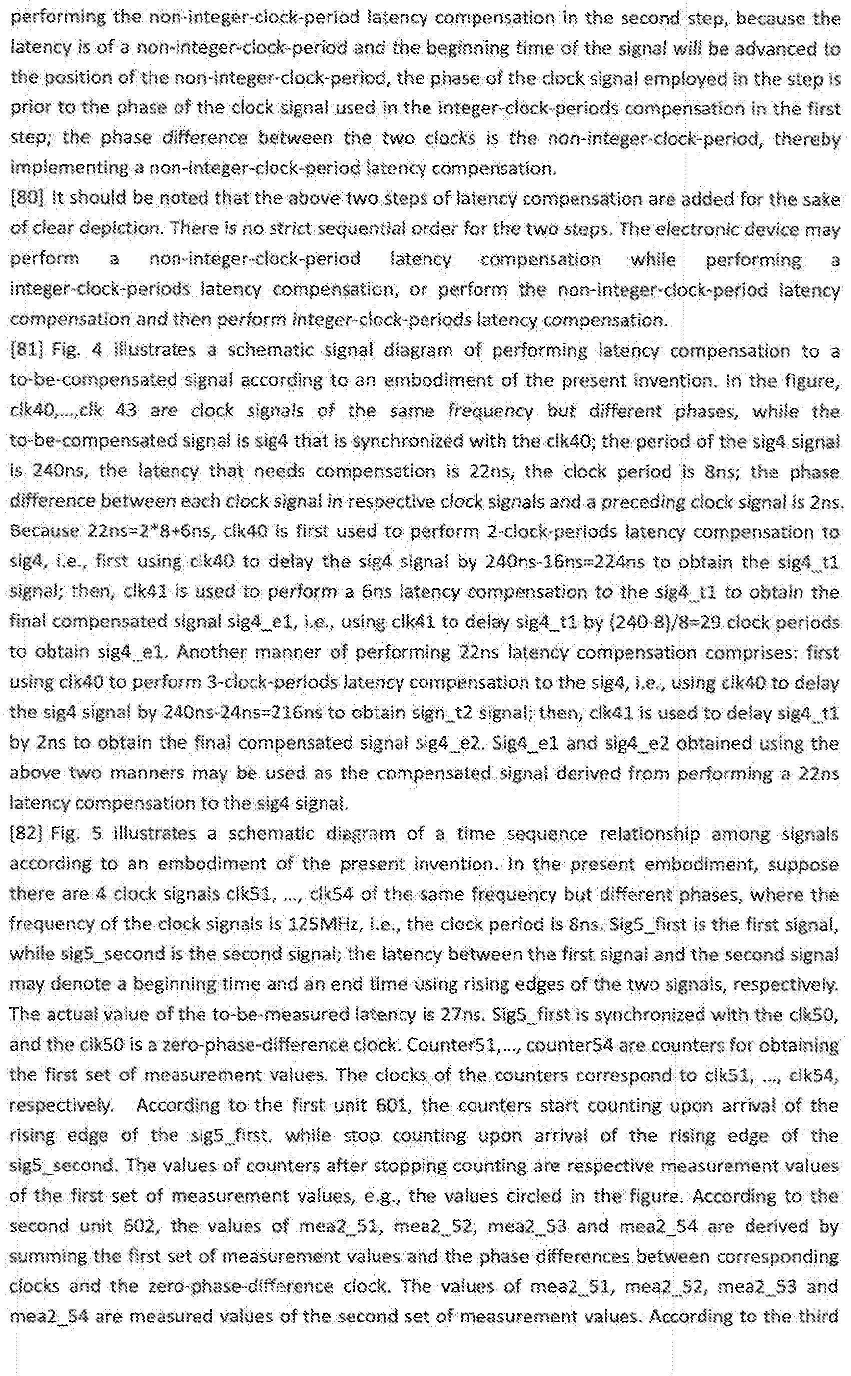 unit 603, the minimum measurement value is the value of mea2_52: 28s, i.e., the measured latency value is 28ns.

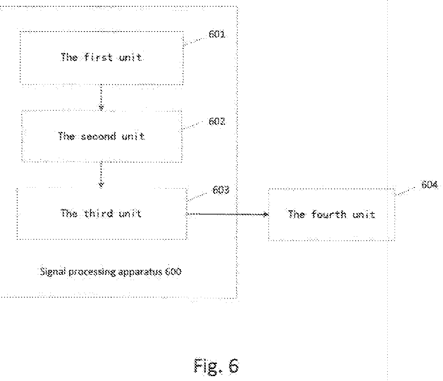

In an embodiment of a further aspect of the present invention, there is provided an electronic device, including a signal processing apparatus 600 as illustrated in Fig. 6. The electronic device includes, but not limited to, a communication device, a terminal device, a network device, a medical device, or a measurement instrument, among other electronic devices. The communication device includes, but not limited to, a router, a switch, a base station, a core network, a wireless local area network controller or etc. The terminal device includes, but not limited to, a smart mobile phone, a tablet computer, a PDA, a PC or etc. The network device includes, but not limited to, a single network server, a server group comprised of multiple network servers, or a cloud computing-based cloud comprises of a considerable number of computers or network servers. In the present embodiment, a method for signal processing may perform processing to a digital signal, or may perform processing to an analog signal.

It should be noted that the present invention may be implemented in software and/or a combination of software and hardware. For example, various modules of the present invention may be implemented using an application-specific integrated circuit (ASIC) or any other similar hardware devices. In one embodiment, the software program of the present invention may be executed by the processor to implement the steps or functions above. Likewise, the software program (including a relevant data structure) of the present invention may be stored in a computer-readable recording medium, e.g., a RAM memory, a magnetic or optical driver or a floppy disk and a similar device. In addition, some steps or functions of the present invention may be implemented by hardware, e.g., as a circuit cooperating with the processor so as to execute respective steps or functions.

To those skilled in the art, it is apparent that the present invention is not limited to the details of the illustrative embodiments. The present invention can be implemented in other specific form. Therefore, in any perspective, the embodiments should be regarded as illustrative, not limitative. The scope of the present invention is limited by the appended claims, rather than the depiction above. No reference numerals in the claims should be regarded as limiting the involved claims. Besides, it is apparent that the word "comprise" or "include" does not exclude other units or steps, and a singular form does not exclude plurality. A plurality of units or modules stated in a system claim may also be implemented by one unit or module through software or hardware. Words like the first and second are used to indicate names, not indicating any specific sequence.

## Claims

1. A signal processing method, comprising:
- measuring (S1) a latency between a first signal and a second signal using multiple clock signals of the same frequency but different phases, to obtain a first set of measurement values;
- determining (S2) a second set of measurement values from the first set of measurement values and phase differences between the multiple clock signals and a zero-phase-difference clock signal, wherein the zero-phase-difference clock signal is a clock signal with a fixed phase which is artificially determined and wherein the values associated with the second set of measurement values are different from each other;
- selecting a smaller measurement value from the second set of measurement values as the latency between the first signal and the second signal.

2. The method according to claim 1, wherein the first signal is synchronized with the zero-phase-difference clock signal.

3. The method according to claim 1 or 2, wherein the step of obtaining a first set of measurement values comprises:
- providing multiple counters, each being applied with a respective clock signal in the multiple clock signals, wherein each of the counters is configured to start counting upon arrival of the first signal, and to stop counting upon arrival of the second signal, and a count value of each of the multiple counters is used as a measurement value in the first set of measurement values.

4. The method according to claim 1 or 2, wherein the step of obtaining a first set of measurement values comprises:
- counting the first signal and the second signal according to each clock signal in the multiple clock signals, wherein a counter starts to count upon arrival of the first signal and another counter starts to count upon arrival of the second signal to obtain respective count values of the first signal and the second signal;
- calculating, for the each clock signal, a difference between the count values of the first signal and the second signal as a measurement value in the first set of measurement values, respectively.

5. The method according to claim 1, wherein the step of determining (S2) a second set of measurement values comprises:
- for each measurement value in the first set of measurement values, adding a phase difference between a clock signal corresponding to the measurement value in the multiple clock signals and the zero-phase-difference clock signal to the measurement value, to obtain a measurement value in the second set of measurement values.

6. The method according to claim 1, wherein the step of selecting a smaller measurement value from the second set of measurement values as the latency between the first signal and the second signal comprises:
- selecting a minimum measurement value from the second set of measurement values as the latency between the first signal and the second signal.

7. The method according to claim 1, further comprising:
- compensating a to-be-compensated signal according to the determined latency, to obtain a compensated signal;
the step comprising:
- compensating the to-be-compensated signal with one portion of said latency including a number of integer clock periods, to obtain an integer-clock-periods compensated signal;
- compensating the integer-clock-periods compensated signal with another portion of said latency including a non-integer clock period, to obtain the compensated signal, wherein the compensation with the non-integer clock period uses a clock signal, in the multiple clock signals, which has a non-integer clock period phase difference with the clock signal used for compensating the to-be-compensated signal.

8. A signal processing apparatus (600), comprising:
a first unit (601) configured to measure a latency between a first signal and a second signal using multiple clock signals of the same frequency but different phases, to obtain a first set of measurement values;
a second unit (602) configured to determine a second set of measurement values from the first set of measurement values and phase differences between the multiple clock signals and a zero-phase-difference clock signal, wherein the zero-phase-difference clock signal is a clock signal with a fixed phase which is artificially determined and wherein the values associated with the second set of measurement values are different from each other;
a third unit (603) configured to select a smaller measurement value from the second set of measurement values as the latency between the first signal and the second signal.

9. The signal processing apparatus (600) according to claim 8, wherein the first signal is synchronized with the zero phase difference clock signal.

10. The signal processing apparatus (600) according to claim 8 or 9, wherein the first unit (601) comprises:
multiple counters, each being applied with a respective clock signal in the multiple clock signals, wherein each of the multiple counters is configured to start counting upon arrival of the first signal, and to stop counting upon arrival of the second signal,
the first unit (601) is configured to use a count value of each of the counters as a measurement value in the first set of measurement values.

11. The signal processing apparatus (600) according to claim 8 or 9, wherein the first unit (601) is configured to count the first signal and the second signal according to each clock signal in the multiple clock signals, respectively, wherein a counter starts to count upon arrival of the first signal and another counter starts to count upon arrival of the second signal to obtain respective count values of the first signal and the second signal; and calculate, for the each clock signal, a difference between the count values of the first signal and the second signal as a measurement value in the first set of measurement values, respectively.

12. The signal processing apparatus (600) according to claim 8, wherein the second unit (602) is configured to:
for each measurement value in the first set of measurement values, add a phase difference between a clock signal corresponding to the measurement value in the multiple clock signals and the zero-phase-difference clock signal to the measurement value, to obtain a measurement value in the second set of measurement values.

13. The signal processing apparatus according to claim 8, wherein the third unit is configured to select a minimum measurement value from the second set of measurement values as the latency between the first signal and the second signal.

14. The signal processing apparatus (600) according to claim 8, further comprising:
a fourth unit (604) configured to perform latency compensation to a to-be-compensated signal according to the determined latency, to obtain a compensated signal;
the compensation operation of the fourth unit (604) comprising:
- compensating the to-be-compensated signal with one portion of said latency including a number of integer clock periods, to obtain an integer-clock-periods compensated signal;
- compensating the integer-clock-periods compensated signal with another portion of said latency including a non-integer clock period, to obtain the compensated signal, wherein the compensation with the non-integer clock period uses a clock signal, in the multiple clock signals, which has a non-integer clock period phase difference with the clock signal used for compensating the to-be-compensated signal.

15. An electronic device, comprising a signal processing apparatus (600) according to any one of claims 8 to 14.

## Patentansprüche

1. Signalverarbeitungsverfahren, das Folgendes umfasst:
- Messen (S1) einer Latenz zwischen einem ersten Signal und einem zweiten Signal unter Verwendung von mehreren Taktsignalen derselben Frequenz aber unterschiedlicher Phasen, um einen ersten Satz von Messwerten zu erhalten;
- Bestimmen (S2) eines zweiten Satzes von Messwerten aus dem ersten Satz von Messwerten und Phasendifferenzen zwischen den mehreren Taktsignalen und einem Nullphasendifferenztaktsignal, wobei das Nullphasendifferenztaktsignal ein Taktsignal mit einer festen Phase ist, die künstlich bestimmt wird, und wobei sich die Werte, die mit dem zweiten Satz von Messwerten verknüpft sind, voneinander unterscheiden;
- Auswählen eines kleineren Messwertes aus dem zweiten Satz von Messwerten als die Latenz zwischen dem ersten Signal und dem zweiten Signal.

2. Verfahren nach Anspruch 1, wobei das erste Signal mit dem Nullphasendifferenztaktsignal synchronisiert wird.

3. Verfahren nach Anspruch 1 oder 2, wobei der Schritt des Erhaltens eines ersten Satzes von Messwerten Folgendes umfasst:
- Bereitstellen von mehreren Zählern, an die ein jeweiliges Taktsignal der mehreren Taktsignale angelegt wird, wobei jeder der Zähler dazu ausgelegt ist, das Zählen nach Ankunft des ersten Signals zu starten und das Zählen nach Ankunft des zweiten Signals zu beenden, und ein Zählwert von jedem der mehreren Zähler als ein Messwert im ersten Satz von Messwerten verwendet wird.

4. Verfahren nach Anspruch 1 oder 2, wobei der Schritt des Erhaltens eines ersten Satzes von Messwerten Folgendes umfasst:
- Zählen des ersten Signals und des zweiten Signals gemäß jedem Taktsignal der mehreren Taktsignale, wobei ein Zähler nach Ankunft des ersten Signals zu zählen beginnt und ein anderer Zähler nach Ankunft des zweiten Signals zu zählen beginnt, um jeweilige Zählwerte des ersten Signals und des zweiten Signals zu erhalten;
- Berechnen einer Differenz zwischen den Zählwerten des ersten Signals bzw. des zweiten Signals für jedes Taktsignal als einen Messwert im ersten Satz von Messwerten.

5. Verfahren nach Anspruch 1, wobei der Schritt des Bestimmens (S2) eines zweiten Satzes von Messwerten Folgendes umfasst:
- für jeden Messwert im ersten Satz von Messwerten Hinzufügen einer Phasendifferenz zwischen einem Taktsignal, das dem Messwert in den mehreren Taktsignalen entspricht, und dem Nullphasendifferenztaktsignal zum Messwert, um einen Messwert im zweiten Satz von Messwerten zu erhalten.

6. Verfahren nach Anspruch 1, wobei der Schritt des Auswählens eines kleineren Messwertes aus dem zweiten Satz von Messwerten als die Latenz zwischen dem ersten Signal und dem zweiten Signal Folgendes umfasst:
- Auswählen eines Mindestmesswertes aus dem zweiten Satz von Messwerten als die Latenz zwischen dem ersten Signal und dem zweiten Signal.

7. Verfahren nach Anspruch 1, das ferner Folgendes umfasst:
- Kompensieren eines zu kompensierenden Signals gemäß der bestimmten Latenz, um ein kompensiertes Signal zu erhalten;
wobei der Schritt Folgendes umfasst:
- Kompensieren des zu kompensierenden Signals mit einem Abschnitt der Latenz, der eine Anzahl von ganzzahligen Taktperioden beinhaltet, um ein kompensiertes Signal mit ganzzahligen Taktperioden zu erhalten;
- Kompensieren des kompensierten Signals mit ganzzahligen Taktperioden mit einem anderen Abschnitt der Latenz, der eine nicht ganzzahlige Taktperiode beinhaltet, um das kompensierte Signal zu erhalten, wobei die Kompensierungen mit der nicht ganzzahligen Taktperiode ein Taktsignal der mehreren Taktsignale verwendet, das eine nicht ganzzahlige Taktperiodenphasendifferenz mit dem Taktsignal aufweist, das zum Kompensieren des zu kompensierenden Signals verwendet wird.

8. Signalverarbeitungseinrichtung (600), die Folgendes umfasst:
eine erste Einheit (601), die dazu ausgelegt ist, eine Latenz zwischen einem ersten Signal und einem zweiten Signal unter Verwendung von mehreren Taktsignalen derselben Frequenz aber unterschiedlicher Phasen zu messen, um einen ersten Satz von Messwerten zu erhalten;
eine zweite Einheit (602), die dazu ausgelegt ist, einen zweiten Satz von Messwerten aus dem ersten Satz von Messwerten und Phasendifferenzen zwischen den mehreren Taktsignalen und einem Nullphasendifferenztaktsignal zu bestimmen, wobei das Nullphasendifferenztaktsignal ein Taktsignal mit einer festen Phase ist, die künstlich bestimmt wird, und wobei sich die Werte, die mit dem zweiten Satz von Messwerten verknüpft sind, voneinander unterscheiden;
eine dritte Einheit (603), die dazu ausgelegt ist, einen kleineren Messwert aus dem zweiten Satz von Messwerten als die Latenz zwischen dem ersten Signal und dem zweiten Signal auszuwählen.

9. Signalverarbeitungseinrichtung (600) nach Anspruch 8, wobei das erste Signal mit dem Nullphasendifferenztaktsignal synchronisiert ist.

10. Signalverarbeitungseinrichtung (600) nach Anspruch 8 oder 9, wobei die erste Einheit (601) Folgendes umfasst:
mehrere Zähler, an die ein jeweiliges Taktsignal der mehreren Taktsignale angelegt wird, wobei jeder der mehreren Zähler dazu ausgelegt ist, das Zählen nach Ankunft des ersten Signals zu starten und das Zählen nach Ankunft des zweiten Signals zu beenden,
die erste Einheit (601) ist dazu ausgelegt, einen Zählwert von jedem der Zähler als einen Messwert im ersten Satz von Messwerten zu verwenden.

11. Signalverarbeitungseinrichtung (600) nach Anspruch 8 oder 9, wobei die erste Einheit (601) dazu ausgelegt ist, das erste Signal bzw. das zweite Signal gemäß jedem Taktsignal der mehreren Taktsignale zu zählen, wobei ein Zähler nach Ankunft des ersten Signals zu zählen beginnt und ein anderer Zähler nach Ankunft des zweiten Signals zu zählen beginnt, um jeweilige Zählwerte des ersten Signals und des zweiten Signals zu erhalten; und eine Differenz zwischen den Zählwerten des ersten Signals bzw. des zweiten Signals für jedes Taktsignal als einen Messwert im ersten Satz von Messwerten zu berechnen.

12. Signalverarbeitungseinrichtung (600) nach Anspruch 8, wobei die zweite Einheit (602) zu Folgendem ausgelegt ist:
für jeden Messwert im ersten Satz von Messwerten Hinzufügen einer Phasendifferenz zwischen einem Taktsignal, das dem Messwert in den mehreren Taktsignalen entspricht, und dem Nullphasendifferenztaktsignal zum Messwert, um einen Messwert im zweiten Satz von Messwerten zu erhalten.

13. Signalverarbeitungseinrichtung nach Anspruch 8, wobei die dritte Einheit dazu ausgelegt ist, einen Mindestmesswert aus dem zweiten Satz von Messwerten als die Latenz zwischen dem ersten Signal und dem zweiten Signal auszuwählen.

14. Signalverarbeitungseinrichtung (600) nach Anspruch 8, die ferner Folgendes umfasst:
eine vierte Einheit (604), die dazu ausgelegt ist, eine Latenzkompensierung an einem zu kompensierenden Signal gemäß der bestimmten Latenz durchzuführen, um ein kompensiertes Signal zu erhalten;
wobei der Kompensierungsvorgang der vierten Einheit (604) Folgendes umfasst:
- Kompensieren des zu kompensierenden Signals mit einem Abschnitt der Latenz, der eine Anzahl von ganzzahligen Taktperioden beinhaltet, um ein kompensiertes Signal mit ganzzahligen Taktperioden zu erhalten;
- Kompensieren des kompensierten Signals mit ganzzahligen Taktperioden mit einem anderen Abschnitt der Latenz, der eine nicht ganzzahlige Taktperiode beinhaltet, um das kompensierte Signal zu erhalten, wobei die Kompensierungen mit der nicht ganzzahligen Taktperiode ein Taktsignal der mehreren Taktsignale verwendet, das eine nicht ganzzahlige Taktperiodenphasendifferenz mit dem Taktsignal aufweist, das zum Kompensieren des zu kompensierenden Signals verwendet wird.

15. Elektronische Vorrichtung, die eine Signalverarbeitungseinrichtung (600) nach einem der Ansprüche 8 bis 14 umfasst.

## Revendications

1. Procédé de traitement de signaux, comprenant :
- la mesure (S1) d'une latence entre un premier signal et un deuxième signal en utilisant de multiples signaux d'horloge de la même fréquence mais de différentes phases, pour obtenir un premier jeu de valeurs de mesure ;
- la détermination (S2) d'un deuxième jeu de valeurs de mesure à partir du premier jeu de valeurs de mesure et de différences de phase entre les multiples signaux d'horloge et d'un signal d'horloge à différence de phase nulle, dans lequel le signal d'horloge à différence de phase nulle est un signal d'horloge à phase fixe déterminée artificiellement, et dans lequel les valeurs associées au deuxième jeu de valeurs de mesure sont différentes les unes des autres ;
- la sélection d'une plus petite valeur de mesure dans le deuxième jeu de valeurs de mesure en tant que latence entre le premier signal et le deuxième signal.

2. Procédé selon la revendication 1, dans lequel le premier signal est synchronisé avec le signal d'horloge à différence de phase nulle.

3. Procédé selon la revendication 1 ou 2, dans lequel l'étape d'obtention d'un premier jeu de valeurs de mesure comprend :
- la fourniture de multiples compteurs, chacun étant appliqué avec un signal d'horloge respectif des multiples signaux d'horloge, dans lequel chacun des compteurs est configuré pour commencer le comptage à l'arrivée du premier signal et pour arrêter le comptage à l'arrivée du deuxième signal, et une valeur de comptage de chacun des multiples compteurs est utilisée en tant que valeur de mesure du premier jeu de valeurs de mesure.

4. Procédé selon la revendication 1 ou 2, dans lequel l'étape d'obtention d'un premier jeu de valeurs de mesure comprend :
- le comptage du premier signal et du deuxième signal selon chaque signal d'horloge des multiples signaux d'horloge, dans lequel un compteur commence le comptage à l'arrivée du premier signal et un autre compteur commence le comptage à l'arrivée du deuxième signal pour obtenir des valeurs de comptage respectives du premier signal et du deuxième signal ;
- le calcul, pour chaque signal d'horloge, d'une différence entre les valeurs de comptage du premier signal et du deuxième signal en tant que valeur de mesure du premier jeu de valeurs de mesure, respectivement.

5. Procédé selon la revendication 1, dans lequel l'étape de détermination (S2) d'un deuxième jeu de valeurs de mesure comprend :
- pour chaque valeur de mesure du premier jeu de valeurs de mesure, l'ajout, à la valeur de mesure, d'une différence de phase entre un signal d'horloge des multiples signaux d'horloge correspondant à la valeur de mesure et le signal d'horloge à différence de phase nulle, pour obtenir une valeur de mesure dans le deuxième jeu de valeurs de mesure.

6. Procédé selon la revendication 1, dans lequel l'étape de sélection d'une plus petite valeur de mesure dans le deuxième jeu de valeurs de mesure en tant que latence entre le premier signal et le deuxième signal comprend :
- la sélection d'une valeur de mesure minimale dans le deuxième jeu de valeurs de mesure en tant que latence entre le premier signal et le deuxième signal.

7. Procédé selon la revendication 1, comprenant en outre :
- la compensation d'un signal à compenser selon la latence déterminée, pour obtenir un signal compensé ;
l'étape comprenant :
- la compensation du signal à compenser par une partie de ladite latence comportant un nombre de périodes d'horloge en nombre entier, pour obtenir un signal compensé de période d'horloge en nombre entier ;
- la compensation du signal compensé de période d'horloge en nombre entier par une autre partie de ladite latence comportant une période d'horloge en nombre non entier, pour obtenir le signal compensé, dans lequel la compensation par la période d'horloge en nombre non entier utilise un signal d'horloge des multiples signaux d'horloge qui a une différence de phase à période d'horloge en nombre non entier avec le signal d'horloge utilisé pour compenser le signal à compenser.

8. Appareil de traitement de signaux (600), comprenant :
une première unité (601) configurée pour mesurer une latence entre un premier signal et un deuxième signal en utilisant de multiples signaux d'horloge de la même fréquence mais de différentes phases, pour obtenir un premier jeu de valeurs de mesure ;
une deuxième unité (602) configurée pour déterminer un deuxième jeu de valeurs de mesure à partir du premier jeu de valeurs de mesure et de différences de phase entre les multiples signaux d'horloge et d'un signal d'horloge à différence de phase nulle, dans lequel le signal d'horloge à différence de phase nulle est un signal d'horloge à phase fixe déterminée artificiellement et dans lequel les valeurs associées au deuxième jeu de valeurs de mesure sont différentes les unes des autres ;
une troisième unité (603) configurée pour sélectionner une plus petite valeur de mesure dans le deuxième jeu de valeurs de mesure en tant que latence entre le premier signal et le deuxième signal.

9. Appareil de traitement de signaux (600) selon la revendication 8, dans lequel le premier signal est synchronisé avec le signal d'horloge à différence de phase nulle.

10. Appareil de traitement de signaux (600) selon la revendication 8 ou 9, dans lequel la première unité (601) comprend :
de multiples compteurs, chacun étant appliqué avec un signal d'horloge respectif des multiples signaux d'horloge, dans lequel chacun des multiples compteurs est configuré pour commencer le comptage à l'arrivée du premier signal, et pour arrêter le comptage à l'arrivée du deuxième signal,
la première unité (601) est configurée pour utiliser une valeur de comptage de chacun des compteurs en tant que valeur de mesure du premier jeu de valeurs de mesure.

11. Appareil de traitement de signaux (600) selon la revendication 8 ou 9, dans lequel la première unité (601) est configurée pour compter le premier signal et le deuxième signal selon chaque signal d'horloge des multiples signaux d'horloge, respectivement, dans lequel un compteur commence à compter à l'arrivée du premier signal et un autre compteur commence à compter à l'arrivée du deuxième signal pour obtenir des valeurs de comptage respectives du premier signal et du deuxième signal ; et calcule, pour chaque signal d'horloge, une différence entre les valeurs de comptage du premier signal et du deuxième signal en tant que valeur de mesure du premier jeu de valeurs de mesure, respectivement.

12. Appareil de traitement de signaux (600) selon la revendication 8, dans lequel la deuxième unité (602) est configurée pour :
pour chaque valeur de mesure du premier jeu de valeurs de mesure, ajouter à la valeur de mesure une différence de phase entre un signal d'horloge des multiples signaux d'horloge correspondant à la valeur de mesure et le signal d'horloge à différence de phase nulle, pour obtenir une valeur de mesure dans le deuxième jeu de valeurs de mesure.

13. Appareil de traitement de signaux selon la revendication 8, dans lequel la troisième unité est configurée pour sélectionner une valeur de mesure minimale dans le deuxième jeu de valeurs de mesure en tant que latence entre le premier signal et le deuxième signal.

14. Appareil de traitement de signaux (600) selon la revendication 8, comprenant en outre :
une quatrième unité (604) configurée pour réaliser une compensation de latence sur un signal à compenser selon la latence déterminée, pour obtenir un signal compensé ;
l'opération de compensation de la quatrième unité (604) comprenant :
- la compensation du signal à compenser par une partie de ladite latence comportant un nombre de périodes d'horloge en nombre entier, pour obtenir un signal compensé de période d'horloge en nombre entier ;
- la compensation du signal compensé de période d'horloge en nombre entier par une autre partie de ladite latence comportant une période d'horloge en nombre non entier, pour obtenir le signal compensé, dans lequel la compensation par la période d'horloge en nombre non entier utilise un signal d'horloge des multiples signaux d'horloge qui a une différence de phase à période d'horloge en nombre non entier avec le signal d'horloge utilisé pour compenser le signal à compenser.

15. Dispositif électronique, comprenant un appareil de traitement de signaux (600) selon l'une quelconque des revendications 8 à 14.
